# EUROPÄISCHE PATENTANMELDUNG

(11) **EP 1 441 216 A2**
(43) Veröffentlichungstag der Anmeldung: **28.07.2004**
(21) Anmeldenummer: 04000944.1
(22) Anmeldetag: 17.01.2004
(51) Int. Cl.: G01N 21/25, G01N 21/64

(54) **Vorrichtung und Verfahren zum Beobachten von Reaktionen in Proben**

(30) Priorität: 21.01.2003 CH 852003
(71) Anmelder: Tecan Trading AG, 8708 Männedorf (CH)
(72) Erfinder: Schürf, Markus, 83377 Vachendorf (DE); Gebetsroither, Harald, 5082 Grödig (AT); Erlbacher, Andreas, 5441 Abtenau (AT)
(74) Vertreter: OK pat AG

(57) **Zusammenfassung**

Die Erfindung betrifft eine Vorrichtung (1) zum Beobachten von Reaktionen in Proben (2), denen ein Reagens (3) zugegeben wird bzw. ein Verfahren, das auf der Verwendung dieser Vorrichtung beruht. Diese Vorrichtung umfasst zumindest eine erste optische Einrichtung (4) zum Beobachten von Proben (2) in Richtung einer ersten optischen Achse (5) und in einem, von der ersten optischen Achse durchstossenen ersten Beobachtungsbereich (6); eine erste Einrichtung (7) zur Aufnahme von Proben (2) enthaltenden Behältern (8) und zur Ausrichtung von Proben in diesen Behältern gegenüber der ersten optischen Achse (5); sowie eine Injektionseinrichtung (10) zum Zugeben von Flüssigkeiten (3) zu Proben (2) sowie eine Beleuchtungseinrichtung (17) zum Bestrahlen der Proben (2) mit Anregungslicht einer ersten Wellenlänge. Dabei ist die Injektionseinrichtung (10) vorzugsweise zwischen der ersten optischen Einrichtung (4) und den Behältern (8) angeordnet und umfasst zumindest eine im Beobachtungsbereich (6) der ersten optischen Einrichtung (4) angeordnete Injektoröffnung (11) einer Injektornadel (12) und eine dazu gehörende Zuleitung (13). Die erfindungsgemässe Vorrichtung (1) ist dadurch gekennzeichnet, dass die Injektionseinrichtung (10) zum Zugeben von Flüssigkeiten (3) zu Proben (2) ein Tray (24) umfasst, welches zum Tragen und Positionieren der zumindest einen Injektornadel (12) und deren Zuleitung (13) ausgebildet ist.

## Beschreibung

Die Erfindung betrifft eine Vorrichtung bzw. ein Verfahren zum Beobachten von Proben, denen ein Reagens zugegeben wird, gemäss dem Oberbegriff der unabhängigen Ansprüche 1 bzw. 22. Dabei umfasst diese Vorrichtung zum Beobachten von Reaktionen in Proben zumindest eine erste optische Einrichtung zum Beobachten von Proben in Richtung einer ersten optischen Achse und in einem, von der ersten optischen Achse durchstossenen ersten Beobachtungsbereich; eine erste Einrichtung zur Aufnahme von Proben enthaltenden Behältern und zur Ausrichtung von Proben in diesen Behältern gegenüber der ersten optischen Achse sowie eine Injektionseinrichtung zum Zugeben von Flüssigkeiten zu Proben. Dabei umfasst die Injektionseinrichtung zumindest eine im Beobachtungsbereich der ersten optischen Einrichtung angeordnete Injektoröffnung einer Injektornadel und eine dazu gehörende Zuleitung.

Aus dem Stand der Technik seit vielen Jahren bekannte, gattungsgemässe Vorrichtungen beruhen auf dem Messen der Lumineszenz von mit einem Reagens versetzten Proben. Unter Lumineszenz wird allgemein ein Aussenden von Licht bezeichnet, welches auf das Ablaufen einer chemischen Reaktion in einer Probe zurückzuführen ist. Diese Geräte zum Beobachten von Reaktionen in Proben, denen ein Reagens zugegeben wird, umfassen zumindest eine erste optische Einrichtung zum Beobachten von Proben in Richtung einer ersten optischen Achse. Zudem umfassen solche Geräte eine erste Einrichtung zur Aufnahme von Proben enthaltenden Behältern und zur Ausrichtung von Proben in diesen Behältern gegenüber der ersten optischen Achse sowie eine zweite Einrichtung zur gegenseitigen Ausrichtung der Proben und der ersten optischen Einrichtung entlang der ersten optischen Achse. Mittels einer Injektionseinrichtung werden Flüssigkeiten bzw. Reagenzien den vorgelegten Proben zugegeben. Die Injektionseinrichtung ist dabei zwischen der ersten optischen Einrichtung und den Behältern angeordnet und umfasst zumindest eine im Beobachtungsbereich der ersten optischen Einrichtung angeordnete Injektoröffnung einer Injektornadel und eine dazu gehörende Zuleitung. Der Injektor wird also zum Starten oder Initiieren einer solchen, eine Lumineszenz der Probe auslösenden Reaktion verwendet. Dabei wird eine bestimmte Menge eines flüssigen Reagens mit einem Injektor in eine vorgelegte, flüssige Probe gegeben. Als Reagens werden Flüssigkeiten, wie Aktivierungslösungen, Stopplösungen und dergleichen bezeichnet. Nach dem Detektieren und Aufzeichnen der durch diese Reaktion ausgelösten Lumineszenz wird die Probe zum Auslösen und Messen einer von der Probe ausgehenden Fluoreszenz an eine zweite Messposition verschoben. Unter Fluoreszenz wird allgemein ein Aussenden von Licht bezeichnet, welches auf das Bestrahlen einer Probe mit einer Lichtquelle zurückzuführen ist; dabei ist üblicherweise die Frequenz des Anregungslichts von der Frequenz des von der Probe ausgestrahlten Fluoreszenzlichts verschieden.

Bei der Fluoreszenz und/oder Lumineszenz der Proben kann es sich um ein durch die Struktur der Probe selbst bedingtes Aussenden von Licht handeln. Es kann sich aber auch um eine den Proben zugefügte Eigenschaft handeln, wie sie durch ein Anfärben der Probe mit entsprechenden und im Stand der Technik wohlbekannten Stoffen, aber auch durch ans sich bekannte, mittels Antikörpern oder Liganden an Probenmoleküle bindende Stoffe erzeugt werden kann. Mit den aus dem Stand der Technik bekannten Geräten ist es nicht möglich, eine durch die Reaktion der Probe mit dem Reagens ausgelöste Lumineszenz und eine durch Bestrahlen der Probe mit Anregungslicht ausgelöste Fluoreszenz simultan zu verfolgen.

In den aus dem Stand der Technik bekannten Vorrichtungen kann zudem das Einrichten bzw. Austauschen der Injektoren nur bei geöffnetem Gehäuse erfolgen. Bei diesen heikeln Arbeiten können die Injektoren bzw. Injektornadeln beschädigt werden.

Die Aufgabe der Erfindung besteht deshalb darin, eine Vorrichtung vorzuschlagen, mit der die Lumineszenz und/oder die Fluoreszenz von mit einem Reagens versetzten und mit Anregungslicht bestrahlten Proben gemessen werden kann und bei der die Injektoren bzw. Injektornadeln einfach positioniert bzw. ausgetauscht werden können.

Diese Aufgabe wird gemäss den Merkmalen des unabhängigen Anspruchs 1 gelöst. Vorteilhafte Weiterbildungen und zusätzliche Merkmale der Erfindung ergeben sich aus den abhängigen Ansprüchen.

Vorteile der Erfindung umfassen:
- Die ganze Kinetik der Reaktion einer Probe auf das Versetzen mit einem Reagens und die damit verbundene Intensität und Verteilung der Lumineszenzemission kann simultan mit dem Anregen und Messen der Fluoreszenz dieser Probe und ohne jedes Verschieben von Proben oder Detektoren aufgezeichnet werden.
- Sollen alle in den beispielsweise 96, 384 oder 1536 Wells einer Mikroplatte aufgenommenen Proben simultan auf Fluoreszenz und Lumineszenz untersucht werden, so kann dies dadurch geschehen, dass die Mikroplatte gegenüber der gemeinsamen optischen Achse der Einrichtung zum Detektieren der Fluoreszenz bzw. der Lumineszenz nur jeweils um die Distanz zweier Nachbarwells bewegt werden muss. Ein zeitraubendes Hinundherbewegen der Mikroplatte vom Ort einer optischen Einrichtung zum Detektieren der Fluoreszenz zum Ort der optischen Einrichtung zum Detektieren der Lumineszenz fällt weg, was - insbesondere bei 1536 Well Mikroplatten - eine grosse Zeitersparnis bedeutet.
- Die Injektoren bzw. Injektornadeln können auf einfache Weise und sicher vor Beschädigung aus der Vorrichtung genommen und wieder darin eingesetzt werden.
- Vorgängig zum Durchführen von Versuchen können die Injektoren bzw. Injektornadeln ausserhalb des Gerätes und ohne dieses in irgend einer Weise (z.B. durch Verschmutzen) zu beeinträchtigen, inspiziert, gereinigt und auf deren einwandfreie Funktion geprüft werden.
- Das Tray zur Aufnahme und zum Schutz der Injektoren bzw. Injektornadeln kann dazu verwendet werden, den Beobachtungsbereich für die Lumineszenz der Probe zu definieren.

Die erfindungsgemässe Vorrichtung bzw. das erfindungsgemässe Verfahren werden an Hand von schematischen und beispielhaften Zeichnungen näher erläutert, ohne dass diese Zeichnungen den Umfang der Erfindung einschränken sollen. Dabei zeigen:
- Fig. 1: einen Vertikalschnitt durch die Vorrichtung, gemäss einer ersten Ausführungsform;
- Fig. 2: einen Vertikalschnitt durch eine Vorrichtung, gemäss einer zweiten Ausführungsform;
- Fig. 3: eine Draufsicht auf die Injektoren und deren Aufnahme in der zweiten Ausführungsform.

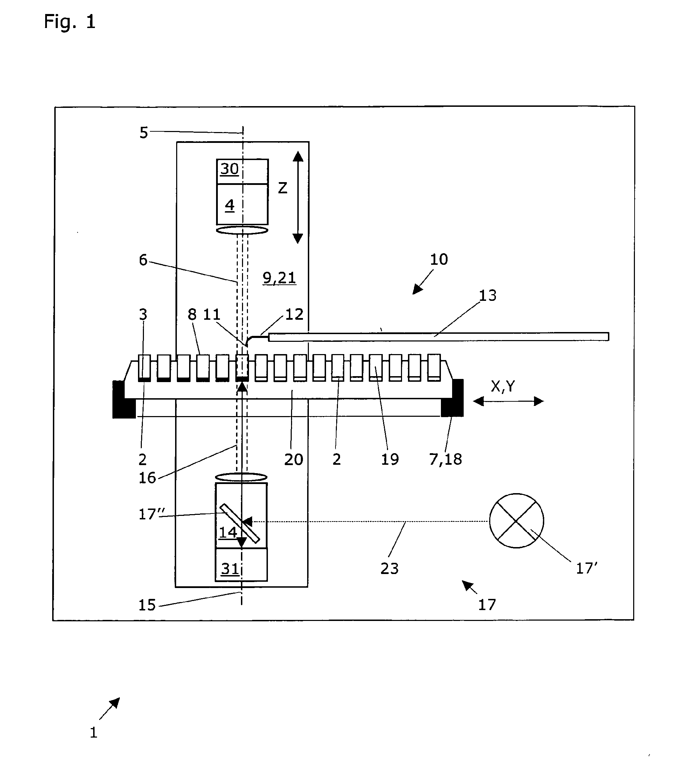

Figur 1 zeigt eine Vorrichtung 1 zum Beobachten von Reaktionen in Proben 2, denen ein Reagens 3 zugegeben wird, gemäss einer ersten Ausführungsform. Diese Vorrichtung umfasst eine erste optische Einrichtung 4 zum Beobachten von Proben 2 in Richtung einer ersten optischen Achse 5 und in einem, von der ersten optischen Achse durchstossenen ersten Beobachtungsbereich 6. Vorzugsweise entspricht der Beobachtungsbereich 6 gerade der Innenfläche eines Wells einer Mikroplatte mit 96, 384 oder 1536 Wells. Zudem umfasst die Vorrichtung eine erste Einrichtung 7 zur Aufnahme von Proben 2 enthaltenden Behältern 8 und zur Ausrichtung von Proben in diesen Behältern gegenüber der ersten optischen Achse 5. Besonders bevorzugte Behälter sind die bereits erwähnten Mikroplatten, welche in der Vorrichtung im wesentlichen horizontal ausgerichtet sind und die automatische Bearbeitung von grossen Zahlen von Proben erlauben. Eine zweite Einrichtung 9 ist vorzugsweise zur gegenseitigen Ausrichtung der Proben 2 und der ersten optischen Einrichtung 4 entlang der ersten optischen Achse 5 ausgebildet. Diese erste optische Achse verläuft vorzugsweise in vertikaler Z-Richtung.

Eine Injektionseinrichtung 10 dient zum Zugeben von Flüssigkeiten 3 zu Proben 2. Diese Injektionseinrichtung ist vorzugsweise zwischen der ersten optischen Einrichtung 4 und den Behältern 8 angeordnet und umfasst zumindest eine im Beobachtungsbereich 6 der ersten optischen Einrichtung 4 angeordnete Injektoröffnung 11 einer Injektornadel 12 bzw. eines Injektors und eine dazu gehörende Zuleitung 13.

Die erfindungsgemässe Vorrichtung 1 umfasst vorzugsweise zudem eine zweite optische Einrichtung 14 zum Beobachten der Proben 2 in Richtung einer zweiten optischen Achse 15 und in einem, von der zweiten optischen Achse durchstossenen zweiten Beobachtungsbereich 16. Ausserdem umfasst die erfindungsgemässe Vorrichtung 1 eine Beleuchtungseinrichtung 17 zum Bestrahlen der Proben 2 mit Anregungslicht einer ersten Wellenlänge. Zu diesem Zweck wird vorzugsweise das Licht einer Blitzlampe 17' über einen im Strahlengang der zweiten optischen Achse 15 angeordneten Dichroidspiegel 17" auf die Probe 2 gelenkt. Das Fluoreszenzlicht der Probe gelangt dann durch den Dichroidspiegel 17" auf den Fluoreszenzdetektor 31 der zweiten optische Einrichtung 14. Die Injektionseinrichtung 10 und die Behälter 8 mit den Proben 2 sind zwischen den beiden optischen Einrichtungen 4,14 angeordnet. Die beiden Beobachtungsbereiche 6,16 überdecken sich im wesentlichen und die beiden optischen Achsen 5,15 verlaufen im wesentlichen gegensinnig parallel zu einander. Vorzugsweise sind die beiden optischen Achsen 5,15 zueinander identisch und verlaufen im wesentlichen vertikal. Besonders bevorzugt wird eine Vorrichtung 1, bei der die erste optische Einrichtung 4 zum Detektieren einer von der Probe 2 ausgehenden Lumineszenz und die zweite optische Einrichtung 14 zum Detektieren einer von der Probe 2 ausgehenden Fluoreszenz ausgebildet sind.

Die erste Einrichtung 7 zur Aufnahme von Proben 2 enthaltenden Behältern 8 und zur Ausrichtung von Proben 2 in diesen Behältern 8 gegenüber der ersten optischen Achse 5 umfasst einen Aufnehmer 18 zum Tragen von Behältern 8. Zu diesem Zweck ist dieser Aufnehmer ist in einer horizontalen Ebene in X- und in Y-Richtung beweglich ausgebildet. Diese Bewegung in einem im wesentlichen horizontalen X,Y-Feld erfolgt vorzugsweise mit einer kreuztischähnlichen Aufnahmevorrichtung und durch motorische Antriebe (nicht gezeigt). Der Aufnehmer 18 ist im Bereich der Proben so ausgebildet, dass das Anregungslicht von unten die Proben erreichen kann und dass das dadurch ausgelöste Fluoreszenzlicht der Proben in die zweite optische Einrichtung 14 mit dem Fluoreszenzdetektor 31 gelangen kann.

Vorzugsweise umfasst die Vorrichtung 1 eine zweite Einrichtung 9 zur gegenseitigen Ausrichtung der Proben 2 und der ersten optischen Einrichtung 4 entlang der ersten optischen Achse 5 eine Aufhängung 21. Daran ist die erste optische Einrichtung 4 in einer vertikalen Z-Richtung beweglich befestigt. Wie Fig. 1 zeigt, ist somit die erste optische Einrichtung 4 in Z-Richtung verfahrbar (Pfeil) und oberhalb des Aufnehmers 18 zum Tragen von Behältern 8 angeordnet, während die zweite optische Einrichtung 14 vorzugsweise unbeweglich fixiert und unterhalb des Aufnehmers 18 angeordnet ist.

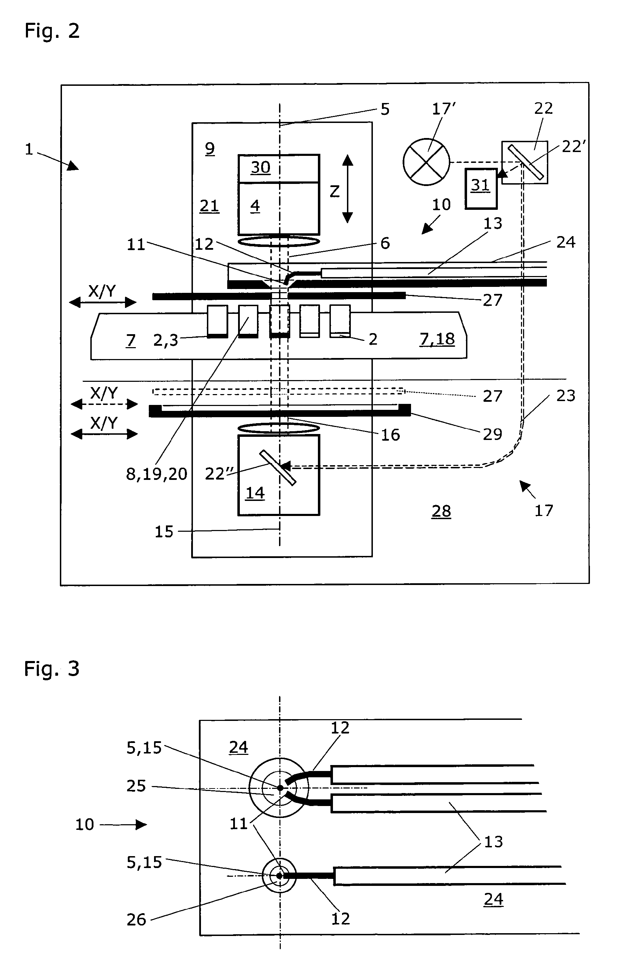

Eine besonders bevorzugte, zweite Ausführungsform der Erfindung ist in den Figuren 2 und 3 dargestellt. Neben den bereits beschriebenen Elementen der ersten Ausführungsform umfasst die Injektionseinrichtung 10 dieser Vorrichtung zum Zugeben von Flüssigkeiten 3 zu Proben 2 ein Tray 24, welches zum Tragen und Positionieren zumindest einer Injektornadel 12 und deren Zuleitung 13 ausgebildet ist. Speziell bevorzugt wird, dass die Injektionseinrichtung 10 drei Injektornadeln 12 mit je einer Injektoröffnung 11 und je einer Zuleitung 13 umfasst. Dabei sind zwei Injektoröffnungen 11 in einem für eine 96-Well Mikroplatte angepassten ersten Beobachtungsbereich 25 und die dritte Injektoröffnung 11 in einem für eine 384-Well Mikroplatte angepassten zweiten Beobachtungsbereich 26 nebeneinander angeordnet (vgl. Draufsicht in Fig. 3).

Alternativ zu der Darstellung in Fig. 3 können auch zwei Injektornadeln 12 in einem für eine 384-Well Mikroplatte angepassten zweiten Beobachtungsbereich 26 nebeneinander angeordnet bzw. mehr oder weniger als drei Injektornadeln 12 (z.B. 1, 2 oder 4 Nadeln) auf einem Tray 24 angeordnet werden. Zudem können auch z.B. drei oder vier Injektornadeln 12 in einem einzigen oder je in mehreren Beobachtungsbereichen 25,26 angeordnet werden (nicht gezeigt).

Diese zweite Ausführungsform umfasst vorzugsweise eine Beleuchtungseinrichtung 17 mit einem Strahlteilerschlitten 22 und einer Faseroptik 23, über welche der Strahlteilerschlitten 22 mit der zweiten optischen Einrichtung 4 verbunden ist (vgl. Fig. 2). Diese Beleuchtungseinrichtung umfasst eine Lichtquelle 17' (z.B. eine Blitzlampe), deren Anregungslicht vorzugsweise über einen im Strahlengang der zweiten optischen Achse 15 angeordneten Spiegel 22" auf die Probe 2 gelenkt wird. Die beiden Beobachtungsbereiche 25,26 sind durch Ausschnitte im Tray 24 der Injektionseinrichtung 10 und/oder durch unterhalb des Trays 24 angeordnete Blenden 27 definiert. Wie in Fig. 2 gezeigt, können diese Blenden 27 in X- oder Y-Richtung motorisch beweglich ausgebildet und entweder zwischen Tray 24 und Proben 2 (ausgezogen gezeichnet) oder zwischen Aufnehmer 18 und zweiter optischer Einrichtung 14 (gestrichelt gezeichnet) angeordnet sein. Es kann auch eine an der Unterseite des Trays 24 selbst befestigte Blende (nicht gezeichnet) vorgesehen oder ganz auf den Einsatz von Blenden verzichtet werden.

Vorzugsweise ist in dieser zweiten Ausführungsform der erfindungsgemässen Vorrichtung 1 das Tray 24 der Injektionseinrichtung 10 an der ersten optischen Einrichtung 4 und mit dieser höhenverstellbar befestigt. Es kann vorgesehen sein, dass das Tray 24 der Injektionseinrichtung 10 zudem an einem Gehäuseteil 28 der Vorrichtung 1 und gegenüber diesem höhenverstellbar befestigt ist. In diesem Fall ist das Tray 24 der Injektionseinrichtung 10 - zum Einstellen der Höhe der Injektionseinrichtung 10 mit der ersten optischen Einrichtung 4 - vorzugsweise elastisch an der ersten optischen Einrichtung 4 und am Gehäuseteil 28 der Vorrichtung 1 befestigt. Eine besonders benutzerfreundliche Variante der Vorrichtung 1 sieht vor, dass das Tray 24 mit den Injektornadeln 12 am Gehäuseteil 28 der Vorrichtung 1 einschnappbar bzw. herausziehbar befestigt ist. Vorzugsweise wird das Tray 24 an der ersten optischen Einrichtung 4 befestigt und ist zusammen mit dieser in Z-Richtung verstellbar.

Vorzugsweise umfasst die Vorrichtung 1 gemäss allen bisher beschriebenen Ausführungsformen einen Schutzschirm 29, der zwischen der Injektionseinrichtung 10 und der zweiten optischen Einrichtung 14 - z.B. in X-Richtung oder in Y-Richtung - beweglich angeordnet ist und in einer Stellung die zweite optische Einrichtung 14 abdeckt. Diese hat den Vorteil, dass ein Schutzschirm 29 immer dann über der zweiten optischen Einrichtung 14 positioniert werden kann, wenn ein Austausch der Behälter 8 bzw. einer Mikroplatte 20 erfolgt. Durch die Verwendung dieses Schutzschirmes wird ein unbeabsichtigtes Abtropfen von Flüssigkeit aus den Injektoröffnungen 11 auf die empfindliche zweite optische Einrichtung 14 erfolgreich verhindert.

Damit keine Bauteile der Vorrichtung 1 einen störenden Einfluss auf die Detektion der Fluoreszenz und/oder Lumineszenz haben können, ist vorzugsweise vorgesehen, dass die Injektornadeln 12 bzw. zumindest die in einen Beobachtungsbereich 25,26 reichenden Teile derselben sowie die beiden optischen Einrichtungen 4,14 Materialien umfassen bzw. Oberflächen aufweisen, die selbst weder lumineszierend noch fluoreszierend sind. Solche Oberflächen können entsprechende Beschichtungen z.B. mit Teflon® (Handelsmarke von DuPont, Wilmington, USA) aufweisen oder auch mechanisch aufgerauht (z.B. gebürstet oder sandgestrahlt) sein. Zudem kann vorgesehen sein, dass die Injektionseinrichtung 10 mindestens drei Injektornadeln 12 umfasst und dass das Tray 24 bzw. zumindest der einen Beobachtungsbereich 25,26 definierende Teil desselben Materialien umfasst bzw. Oberflächen aufweist, die weder lumineszierend noch fluoreszierend sind.

Bei einem Verfahren zum Beobachten von Reaktionen in Proben 2 mit einer Vorrichtung 1, gemäss der ersten, zweiten oder einer davon unterschiedlichen weiteren Ausführungsform, die zumindest eine erste optische Einrichtung 4 zum Beobachten von Proben 2 in Richtung einer ersten optischen Achse 5 und in einem, von der ersten optischen Achse 5 durchstossenen ersten Beobachtungsbereich 6, eine erste Einrichtung 7 zur Aufnahme von Proben 2 enthaltenden Behältern 8 und zur Ausrichtung von Proben 2 in diesen Behältern 8 gegenüber der ersten optischen Achse 5, vorzugsweise eine zweite Einrichtung 9 zur gegenseitigen Ausrichtung der Proben 2 und der ersten optischen Einrichtung 4 entlang der ersten optischen Achse 5 sowie eine Injektionseinrichtung 10 zum Zugeben von Flüssigkeiten 3 zu Proben 2 umfasst, wobei die Injektionseinrichtung 10 vorzugsweise zwischen der ersten optischen Einrichtung 4 und den Behältern 8 angeordnet ist und zumindest eine im Beobachtungsbereich 6 der ersten optischen Einrichtung 4 angeordnete Injektoröffnung 11 einer Injektornadel 12 und eine dazu gehörende Zuleitung 13 umfasst, ist erfindungsgemäss vorgesehen dass die Vorrichtung 1 vorzugsweise eine zweite optische Einrichtung 14 zum Beobachten der Proben 2 in Richtung einer zweiten optischen Achse 15 und in einem, von der zweiten optischen Achse 15 durchstossenen zweiten Beobachtungsbereich 16 sowie eine Beleuchtungseinrichtung 17 zum Bestrahlen der Proben 2 mit Anregungslicht einer ersten Wellenlänge umfasst, wobei die Injektionseinrichtung 10 und die Behälter 8 mit den Proben 2 zwischen den beiden optischen Einrichtungen 4,14 angeordnet sind und wobei sich die beiden Beobachtungsbereiche 6,16 im wesentlichen überdecken und die beiden optischen Achsen 5,15 im wesentlichen gegensinnig parallel zu einander verlaufen.

Das erfindungsgemässe Verfahren umfasst die folgenden Arbeitsschritte:
- Zugeben eines Reagens 3 zu einer Probe 2 mit der Injektionseinrichtung 10 der Vorrichtung 1, welche zum Zugeben von Flüssigkeiten (3) zu Proben (2) ein Tray (24) umfasst, das zum Tragen und Positionieren der zumindest einen Injektornadel (12) und deren Zuleitung (13) ausgebildet ist
- Bestrahlen dieser Probe 2 mit der Beleuchtungseinrichtung 17 mit Anregungslicht einer ersten Wellenlänge
- Gleichzeitiges Aufzeichnen der Lumineszenz und der Fluoreszenz der Probe 2 mit den beiden optischen Einrichtungen 4,14.
- Aufzeichnen der Lumineszenz oder der Fluoreszenz der Probe 2 mit einer der beiden optischen Einrichtungen 4,14.

Entsprechend dieser Verwendung der Vorrichtung kann zudem vorgesehen sein, dass eine Blende 27 so zwischen Injektionseinrichtung 10 und Proben 2 positioniert wird, dass die beiden Beobachtungsbereiche 6,16 auf einen für eine 96-Well Mikroplatte angepassten Beobachtungsbereich 25 oder auf einen für eine 384-Weil Mikroplatte angepassten Beobachtungsbereich 26 reduziert wird. Besonders bevorzugt ist eine motorisch angetriebene, bewegliche Blende, mit der automatisch - z.B. zwischen den Beobachtungsbereichen 25 und 26 - hin und her geschaltet werden kann.

Besonders bevorzugt werden Vorrichtungen und Verfahren, bei denen die einzelnen Arbeitsschritte, wie das Einlegen/Entfernen von Behältern 8 in/aus einen Aufnehmer 18, Positionieren der Proben in X- und/oder Y-Richtung gegenüber der optischen Achse 5,15 der Detektoren; das gegenseitige Positionieren von Proben 2 und Lumineszenzdetektor 30 der ersten optischen Einrichtung 4 in Z-Richtung; das Zugeben von Flüssigkeiten mit einem oder mehreren Injektoren bzw. Injektornadeln 12; das Bewegen des Strahlteilerschlittens 22 mit einem Spiegel 22' in eine Position, bei welcher Anregungslicht in die Faseroptik 23 und dann über einen weiteren im Strahlengang der zweiten optischen Achse 15 angeordneten Spiegel 22" auf die Probe 2 gelenkt wird; das Abgeben von Lichtblitzen mit der Lichtquelle 17' der Beleuchtungseinrichtung 17; das Detektieren der von der Probe 2 ausgesandten Fluoreszenz, welche über den Spiegel 22" und die Faseroptik 23 und den Siegel 22' in einen Fluoreszenzdetektor 31 gelangt; das Detektieren der von der Probe 2 ausgesandten Lumineszenz, welche in einen Lumineszenzdetektor 30 einem und das Aufzeichnen, Verarbeiten und Auswerten bzw. Ausgeben der entsprechenden von den Detektoren abgegeben Signale durch einen Rechner gesteuert und automatisch bzw. motorisch angetrieben ausgeführt werden können. Solche Vorrichtungen umfassen bevorzugt einen solchen Rechner oder sind an einen mit den entsprechenden Fähigkeiten ausgerüsteten Rechner anschliessbar. Solche Vorrichtungen können auch zusätzliche Detektoren umfassen, die z.B. zum Erfassen von Absorbance-, Fluoreszenz- oder Lumineszenz-Werten geeignet sind.

Die Bezugszeichen bezeichnen in allen Figuren sich entsprechende Elemente der Vorrichtung, auch wenn diese nicht ausdrücklich beschrieben sind. Kombinationen von Elementen der beschriebenen Vorrichtungen gehören zum Umfang der Erfindung.

## Patentansprüche

1. Vorrichtung (1) zum Beobachten von Reaktionen in Proben (2), denen ein Reagens (3) zugegeben wird, wobei die Vorrichtung umfasst:
• zumindest eine erste optische Einrichtung (4) zum Beobachten von Proben (2) in Richtung einer ersten optischen Achse (5) und in einem, von der ersten optischen Achse durchstossenen ersten Beobachtungsbereich (6);
• eine erste Einrichtung (7) zur Aufnahme von Proben (2) enthaltenden Behältern (8) und zur Ausrichtung von Proben in diesen Behältern gegenüber der ersten optischen Achse (5);
• eine Injektionseinrichtung (10) zum Zugeben von Flüssigkeiten (3) zu Proben (2), wobei die Injektionseinrichtung zumindest eine im Beobachtungsbereich (6) der ersten optischen Einrichtung (4) angeordnete Injektoröffnung (11) einer Injektornadel (12) und eine dazu gehörende Zuleitung (13) umfasst;
• eine Beleuchtungseinrichtung (17) zum Bestrahlen der Proben (2) mit Anregungslicht einer ersten Wellenlänge;
**dadurch gekennzeichnet, dass** die Injektionseinrichtung (10) zum Zugeben von Flüssigkeiten (3) zu Proben (2) ein Tray (24) umfasst, welches zum Tragen und Positionieren der zumindest einen Injektornadel (12) und deren Zuleitung (13) ausgebildet ist.

2. Vorrichtung (1) nach Anspruch 1, **dadurch gekennzeichnet, dass** die Injektionseinrichtung (10) zwischen der ersten optischen Einrichtung (4) und den Behältern (8) angeordnet ist.

3. Vorrichtung (1) nach Anspruch 1 oder 2, **dadurch gekennzeichnet, dass** sie eine zweite Einrichtung (9) zur gegenseitigen Ausrichtung der Proben (2) und der ersten optischen Einrichtung (4) entlang der ersten optischen Achse (5) umfasst.

4. Vorrichtung (1) nach einem der vorhergehenden Ansprüche, **dadurch gekennzeichnet, dass** sie eine zweite optische Einrichtung (14) zum Beobachten der Proben (2) in Richtung einer zweiten optischen Achse (15) und in einem, von der zweiten optischen Achse durchstossenen zweiten Beobachtungsbereich (16) umfasst, wobei sich die beiden Beobachtungsbereiche (6,16) im wesentlichen überdecken und die beiden optischen Achsen (5,15) im wesentlichen gegensinnig parallel zueinander verlaufen.

5. Vorrichtung (1) nach Anspruch 4, **dadurch gekennzeichnet, dass** die Behälter (8) mit den Proben (2) zwischen den beiden optischen Einrichtungen (4,14) angeordnet sind.

6. Vorrichtung (1) nach einem der vorhergehenden Ansprüche, **dadurch gekennzeichnet, dass** die erste optische Einrichtung (4) zum Detektieren einer von der Probe (2) ausgehenden Lumineszenz und die zweite optische Einrichtung (14) zum Detektieren einer von der Probe (2) ausgehenden Fluoreszenz ausgebildet sind.

7. Vorrichtung (1) nach einem der vorhergehenden Ansprüche, **dadurch gekennzeichnet, dass** die beiden optischen Achsen (5,15) zueinander identisch sind und im wesentlichen vertikal verlaufen.

8. Vorrichtung (1) nach einem der vorhergehenden Ansprüche, **dadurch gekennzeichnet, dass** die erste Einrichtung (7) zur Aufnahme von Proben (2) enthaltenden Behältern (8) und zur Ausrichtung von Proben (2) in diesen Behältern (8) gegenüber der ersten optischen Achse (5) einen Aufnehmer (18) zum Tragen von Behältern (8) umfasst, der in einer horizontalen Ebene in X- und in Y-Richtung beweglich ausgebildet ist.

9. Vorrichtung (1) nach einem der vorhergehenden Ansprüche, **dadurch gekennzeichnet, dass** die Behälter (8) Wells (19) von Mikroplatten (20) sind, in denen Proben (2) aufgenommen sind, wobei die Mikroplatten (20) im wesentlichen horizontal ausgerichtet sind.

10. Vorrichtung (1) nach einem der vorhergehenden Ansprüche, **dadurch gekennzeichnet, dass** die zweite Einrichtung (9) zur gegenseitigen Ausrichtung der Proben (2) und der ersten optischen Einrichtung (4) entlang der ersten optischen Achse (5) eine Aufhängung (21) umfasst, an welcher die erste optische Einrichtung (4) in einer vertikalen Z-Richtung beweglich befestigt ist.

11. Vorrichtung (1) nach einem der Ansprüche 4 bis 6, **dadurch gekennzeichnet, dass** die erste optische Einrichtung (4) oberhalb und die zweite optische Einrichtung (14) unterhalb des Aufnehmers (18) zum Tragen von Behältern (8) angeordnet ist.

12. Vorrichtung (1) nach einem der vorhergehenden Ansprüche, **dadurch gekennzeichnet, dass** die Beleuchtungseinrichtung (17) einen Strahlteilerschlitten (22) und eine Faseroptik (23) umfasst, über welche der Strahlteilerschlitten mit der zweiten optischen Einrichtung (4) verbunden ist.

13. Vorrichtung (1) nach einem der vorhergehenden Ansprüche, **dadurch gekennzeichnet, dass** die Injektionseinrichtung (10) drei Injektornadeln (12) mit je einer Injektoröffnung (11) und je einer Zuleitung (13) umfasst, wobei zwei Injektoröffnungen (11) in einem für eine 96-Well Mikroplatte angepassten ersten Beobachtungsbereich (25) und die dritte Injektoröffnung (11) in einem für eine 384-Well Mikroplatte angepassten zweiten Beobachtungsbereich (26) nebeneinander angeordnet sind.

14. Vorrichtung (1) nach einem der vorhergehenden Ansprüche, **dadurch gekennzeichnet, dass** die beiden Beobachtungsbereiche (25,26) durch Ausschnitte im Tray (24) der Injektionseinrichtung (10) und/oder durch unterhalb des Trays (24) angeordnete Blenden (27) definiert sind.

15. Vorrichtung (1) nach einem der vorhergehenden Ansprüche, **dadurch gekennzeichnet, dass** das Tray (24) der Injektionseinrichtung (10) an der ersten optischen Einrichtung (4) und mit dieser höhenverstellbar befestigt ist.

16. Vorrichtung (1) nach einem der vorhergehenden Ansprüche, **dadurch gekennzeichnet, dass** das Tray (24) der Injektionseinrichtung (10) an einem Gehäuseteil (28) der Vorrichtung (1) und gegenüber diesem höhenverstellbar befestigt ist.

17. Vorrichtung (1) nach einem der vorhergehenden Ansprüche, **dadurch gekennzeichnet, dass** das Tray (24) der Injektionseinrichtung (10) - zum Einstellen der Höhe der Injektionseinrichtung (10) mit der ersten optischen Einrichtung (4) - elastisch an der ersten optischen Einrichtung (4) und am Gehäuseteil (28) der Vorrichtung (1) befestigt ist.

18. Vorrichtung (1) nach einem der vorhergehenden Ansprüche, **dadurch gekennzeichnet, dass** das Tray (24) mit den Injektornadeln (12) am Gehäuseteil (28) der Vorrichtung (1) einschnappbar bzw. herausziehbar befestigt ist.

19. Vorrichtung (1) nach einem der vorhergehenden Ansprüche, **dadurch gekennzeichnet, dass** sie einen Schutzschirm (29) umfasst, der zwischen der Injektionseinrichtung (10) und der zweiten optischen Einrichtung (14) beweglich angeordnet ist und in einer Stellung die zweite optische Einrichtung (14) abdeckt.

20. Vorrichtung (1) nach einem der vorhergehenden Ansprüche, **dadurch gekennzeichnet, dass** die Injektornadeln (12) bzw. zumindest die in einen Beobachtungsbereich (25,26) reichenden Teile derselben sowie die beiden optischen Einrichtungen (4,14) Materialien umfassen bzw. Oberflächen aufweisen, die weder lumineszierend noch fluoreszierend sind.

21. Vorrichtung (1) nach einem der vorhergehenden Ansprüche, **dadurch gekennzeichnet, dass** die Injektionseinrichtung (10) mindestens drei Injektornadeln (12) umfasst, und dass das Tray (24) bzw. zumindest der einen Beobachtungsbereich (25,26) definierende Teil desselben Materialien umfasst bzw. Oberflächen aufweist, die weder lumineszierend noch fluoreszierend sind.

22. Verfahren zum Beobachten von Reaktionen in Proben (2) mit einer Vorrichtung (1) gemäss mindestens einem der Ansprüche 1 bis 21, die zumindest eine erste optische Einrichtung (4) zum Beobachten von Proben (2) in Richtung einer ersten optischen Achse (5) und in einem, von der ersten optischen Achse (5) durchstossenen ersten Beobachtungsbereich (6); eine erste Einrichtung (7) zur Aufnahme von Proben (2) enthaltenden Behältern (8) und zur Ausrichtung von Proben (2) in diesen Behältern (8) gegenüber der ersten optischen Achse (5); eine Injektionseinrichtung (10) zum Zugeben von Flüssigkeiten (3) zu Proben (2), welche zumindest eine im Beobachtungsbereich (6) der ersten optischen Einrichtung (4) angeordnete Injektoröffnung (11) einer Injektornadel (12) sowie eine dazu gehörende Zuleitung (13) umfasst sowie eine Beleuchtungseinrichtung (17) zum Bestrahlen der Proben (2) mit Anregungslicht einer ersten Wellenlänge umfasst, **dadurch gekennzeichnet, dass** einer Probe (2) mit der Injektionseinrichtung (10) - welche zum Zugeben von Flüssigkeiten (3) zu Proben (2) ein Tray (24) umfasst, das zum Tragen und Positionieren der zumindest einen Injektornadel (12) und deren Zuleitung (13) ausgebildet ist - der Vorrichtung (1) ein Reagens (3) zugegeben, diese Probe (2) mit der Beleuchtungseinrichtung (17) mit Anregungslicht einer ersten Wellenlänge bestrahlt und die Lumineszenz und/oder die Fluoreszenz der Probe (2) mit der ersten optischen Einrichtung (4) aufgezeichnet wird.

23. Verfahren nach Anspruch 22, **dadurch gekennzeichnet, dass** die Vorrichtung (1) eine zweite optische Einrichtung (14) zum Beobachten der Proben (2) in Richtung einer zweiten optischen Achse (15) und in einem, von der zweiten optischen Achse (15) durchstossenen zweiten Beobachtungsbereich (16) umfasst, wobei sich die beiden Beobachtungsbereiche (6,16) im wesentlichen überdecken und wobei die Lumineszenz und die Fluoreszenz der Probe (2) gleichzeitig mit den beiden optischen Einrichtungen (4,14) aufgezeichnet wird.

24. Verfahren nach Anspruch 22 oder 23, **dadurch gekennzeichnet, dass** die Injektionseinrichtung (10) und die Behälter (8) mit den Proben (2) zwischen den beiden optischen Einrichtungen (4,14) angeordnet werden.

25. Verfahren nach einem der Ansprüche 22 bis 24, **dadurch gekennzeichnet, dass** eine Blende (27) so zwischen Injektionseinrichtung (10) und Proben (2) positioniert wird, dass einer oder beide Beobachtungsbereiche (6,16) auf einen für eine 96-Well Mikroplatte angepassten Beobachtungsbereich (25) oder auf einen für eine 384-Well Mikroplatte angepassten Beobachtungsbereich (26) reduziert wird.

26. Verfahren nach einem der Ansprüche 22 bis 25, **dadurch gekennzeichnet, dass** ein Schutzschirm (29) immer dann über einer zweiten optischen Einrichtung (14) positioniert wird, wenn ein Austausch der Behälter (8) bzw. einer Mikroplatte (20) erfolgt.
